(19) Europäisches Patentamt
European Patent Office
Office européen des brevets

(11) EP 4 582 780 A1

(12) **EUROPEAN PATENT APPLICATION**

(43) Date of publication:
**09.07.2025 Bulletin 2025/28**

(21) Application number: **24150042.0**

(22) Date of filing: **02.01.2024**

(51) International Patent Classification (IPC):
***G01K 7/42*** *(2006.01)* ***G01K 13/08*** *(2006.01)*
***H02K 11/25*** *(2016.01)* ***F03B 13/00*** *(2006.01)*

(52) Cooperative Patent Classification (CPC):
**G01K 13/08; F03B 13/00; G01K 7/42; H02K 11/20;**
H02K 2213/03

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GE Renewable Technologies**
**38100 Grenoble (FR)**

(72) Inventors:
- **SCHWERY, Alexander**
  **5242 Birr (CH)**
- **BAUMEISTER, Stefan Albert**
  **5242 Birr (CH)**
- **YIM, Eunok**
  **5242 Birr (CH)**
- **SARI, Gökhan**
  **5242 Birr (CH)**

(74) Representative: **Brevalex**
**Tour Trinity**
**1 B Place de la Défense**
**92400 Courbevoie (FR)**

(54) **METHOD AND DEVICE FOR ESTIMATING THE TEMPERATURE OF A ROTOR**

(57) The invention concerns a method for estimating and/or predicting at least the temperature of asynchronous or induction machine, for example a DFIM , connected to a grid, said rotor comprising :
- a stack of steel laminations (25), each steel lamination comprising an inner part (26), also called the yoke, surrounded by teeth (28);
- a rotor winding (32), integrated between teeth (28), in which the rotor currents flow, the method comprising:
a) a step of selecting one or more steel laminations of said stack of steel laminations,
b) a step of selecting at least one node on each of said selected steel laminations in the yoke (26) and/or in the teeth (28) and/or in the rotor winding (32),
c) then a step of estimating and/or predicting at least one temperature of said rotor, based on the balance of the power that flows in said at least one node, and that is dissipated by the at least one node.

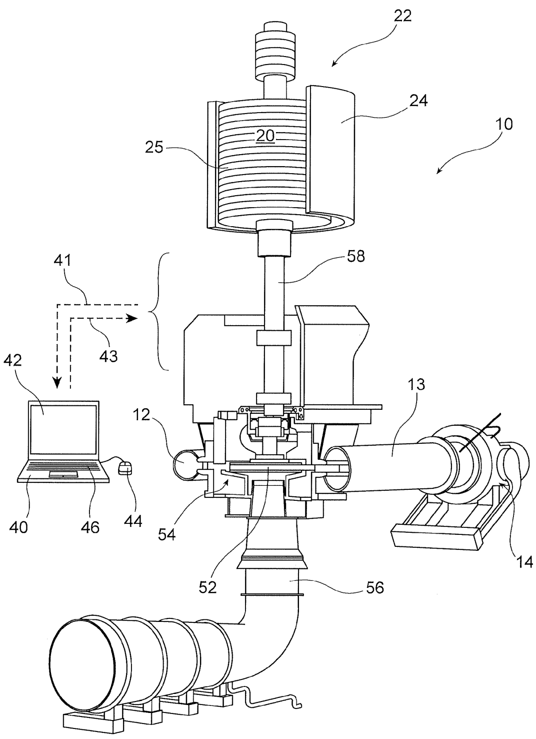


FIG. 1

EP 4 582 780 A1

Processed by Luminess, 75001 PARIS (FR)

## Description

### TECHNICAL FIELD AND PRIOR ART

The invention relates to a method for estimating and measuring the temperature of a rotor of an electric machine, in particular of an hydroelectric machine, configured to rotates about an axis.

In particular, the rotor, which is concentrically surrounded by a stator, is comprised in a rotating electric machine, more precisely in an induction machine or in an asynchronous machine but applies also to synchronous machines . Both induction and synchronous machines are used in a pumped storage power station where the electrical machine together with a pump turbine are implemented for the power conversion. In particular, this method can be applied to a double fed induction machines (DFIM) since it is difficult to measure directly the temperature in the rotor of this kind of device.

In this regard, the document US 8 829 759 B2 discloses a rotating electric machine using an asynchronous machine, more precisely a DFIM . The rotor described in this document includes a rotor lamination stack having several laminated sheets of metallic alloy. Every laminated sheet has a specific shape comprising a yoke and teeth where the magnetic flux circulates. The rotor winding cooper consists of individual bars which are embedded in slots, between teeth, in the rotor laminations. The currents flows in the individual bars, that are interconnected to form a winding in the end winding.

This kind of structure raises a number of problems. In particular, due to the metallic laminations that form the rotor, the rotor experiences losses that produces heat. Some parts of the rotor may even reach temperatures above acceptable limits and may thereby be damaged.

However evaluating the temperature of the rotor remains a challenging issue and no satisfying method is known to solve this problem. Some direct measurement methods using thermocouples have been experimented. But thermocouples are difficult to install and to maintain and the required data transmission systems are not very reliable.

The article of J. Perez, "Fundamental principles of transformer thermal loading and protection," 2010 63rd Annual Conference for Protective Relay Engineers, College Station, TX, USA, 2010, pp. 1-14, doi: 10.1109/CPRE.2010.5469518, describes a method for evaluating and predicting, for a transformer, thermal overload by using a mathematical model that requires measurements of current, ambient temperature and other parameters. The core of a transformer comprise a stack of horizontal or vertical thin iron laminations or sheets as described in figure 1. Several kind of heat losses are observed within a power transformer. Specifically, load losses and no-load losses as described in page 2. In order to absorb heat from the windings, core and structural parts, it is commonly considered as a good method to use oil, natural air or force air to affect the heat transfer process. So in this document, it is proposed to use some methods that combines these elements. However, this method is not applicable to a rotor of a hydroelectric machine because the mathematical models of a transformer and of the DFIM are very different from each other. Moreover, DFIM has additional loss components and the rotor is rotating, and furthermore rotating at a speed that is not constant. Also the transformer’s model cannot make predictions about the rotating part of a DFIM.

It is therefore an object of the invention to propose a method for evaluating indirectly, preferably in real time, the current temperature inside a rotor, for example of an induction machine or an asynchronous machine, and to predict the temperature evolution over time in order to avoid overheating. In particular in order to minimize degradation and damage of its internal parts, and to increase its lifespan.

Another problem is to find a method which predicts when a temperature inside a rotor, for example of an induction machine or an asynchronous machine, can reach certain limits, such limits being for example based on the design of the machine. This can indicate additional created losses (faults on the machine) or problems with loss evacuation (faults on the cooling systems).

Another problem is to find a method to distinguish between the winding and iron temperature on or in the rotor, for example of an induction machine or an asynchronous machine. Indeed different materials (copper, iron) in a rotor may have different temperatures, and no solution exist to detect or predict these different temperatures indirectly

Another problem is to find a method which makes it possible to evaluate or to take into account a stator in a temperature model of the rotor, for example to predict the stator temperatures.

### SUMMARY OF THE INVENTION

The aforementioned problems are, at least partly, solved by a method for estimating and/or predicting at least the temperature of arotor, for example of a hydroelectric motor-generator (for example an asynchronous or a DFIM or an induction machine, said machine being for example coupled to a pump turbine in a hydroelectric pumped storage station) connected to a grid, said rotor for example comprising a stack of steel laminations, said rotor, for example each steel lamination comprising an inner part, also called the yoke, surrounded by teeth and a winding part, comprising one or more rotor winding(s), in which the rotor currents flow, the method comprising :

- a step of selecting at least one node in said rotor, for example one node in the winding part and one node in the steel part;
- a step of estimating and/or predicting at least one temperature of said rotor, based on the balance of the power and/or the energy that flows out of the at least one node and that flows into the at least one node.

Depending on the machine, laminations and the corresponding portion of the winding may have different thicknesses. For instance, thin laminations of 0.6 mm or less can be used in induction or asynchronous machines. In synchronous machine, laminations of up to 5 mm thicknesses can be used.

The invention provides a method for calculating at least one temperature of said rotor, without involving more data than data to calculate the heat flows inside the rotor, in particular the rotation speed of the rotor, the voltage and the current of the rotor and the temperature of the air in which the machine operates. The invention thus does not implement additional sensors on the rotor.

If said rotor comprises a stack of steel laminations, said method may comprise:

a) a step of selecting one or more steel lamination(s) of said stack of steel laminations,
b) a step of selecting at least one node on or in each of said selected steel lamination(s) and/or/in the corresponding part of the rotor winding,
c) then a step of estimating and/or predicting at least one temperature of said rotor, based on the balance of the power or of the energy that flows over time in each node, and of the power or of the energy which is dissipated in the node.

In a particular embodiment, a method according to the invention may comprise estimating or calculating:

- $RI^2$, an estimate of the losses, also called copper losses, dissipated in the conductor which has a resistance R and in which current I circulates;
- and/or iron losses, in the yoke and the teeth, which are dissipated by heat created in the steel laminations;
- and/or ventilation losses dissipated in the process of air-acceleration and deceleration needed to cool the machine, which can be calculated for example based on geometrical information of the machine, i.e at least some or all air passages and the pressure generating capacity of the rotating parts and which are speed dependent;
- and/or additional losses or remaining losses dissipated by other parts of the machine, for example massive parts such as air-covers, which can be calculated for example based on empirically determined factors, and which are current dependent.

In a method according to the invention, said step of estimating or calculating said at least one temperature may implement at least one of the rotor current, the rotor voltage, the rotor speed and the temperature of the cold air.

In an embodiment of the present invention, two or more nodes can be selected. In an example of 4 nodes one node can be selected in the yoke, one node in each of the teeth on each side of the winding (or copper conductor), and one node in the winding.

A method according to the invention may further comprise, based on said at least one temperature, varying one or more parameters of said motor generator, for example rotor current and/or rotor voltage and/or rotor speed and/or rotor power and/or machine power, thereby avoiding critical situations where the temperature could exceed a predetermined limit.

Step b) of a method according to the invention may further comprise selecting at least one node of said stator. Thus, the stator can be included in a method according to the invention. In particular:

- at least one temperature of the stator can be calculated or estimated based on the energy balance at said one or more node(s) of said stator;
- and/or said at least one temperature of the rotor can be calculated or estimated based on the energy balance at said one or more node(s) of said stator.

A method according to the invention may comprise a step of selecting one or more sectors (A,B,C...) of each of said selected sheets, each of said sector(s) comprising a portion of the yoke, a portion of the rotor winding and part of each tooth on each side of the rotor winding.

Said at least one temperature of the rotor may comprise a temperature of said yoke and/or a temperature of said rotor winding.

Said step c) can be based on the following equation:

$$\rho_m c_{p,m} V_m \frac{\partial T_m}{\partial t} = q_{conv} + q_{cond} + \dot{q}_m V_m$$

In a method according to the invention, said turbine can be provided with a runner mechanically coupled to a shaft line, a distributor comprising guide vanes to control a flow of water to said runner.

The invention also concerns a hydroelectric turbine provided with a runner mechanically coupled to a shaft line and a motor, said turbine further comprising a distributor comprising guide vanes to control a flow of water to said runner, said turbine further comprising a controller configured to control said hydroelectric turbine so as to implement a method according to an embodiment of the invention.

In a method or a device according to the invention, the turbine can be of the Francis or Kaplan or bulb type.

The invention also concerns a computer program comprising instructions for implementing a method according to the invention.

## BRIEF DESCRIPTION OF THE DRAWINGS

Other characteristics and advantages shall appear in the following description of embodiments of the invention, given by way of non-limiting examples, in reference to the annexed drawings wherein:

- figure 1 is a schematic representation of a hydroelectric unit to which the invention can be applied;
- figure 2 is a schematic representation of part of a magnetic steel sheet of a lamination stack forming the rotor and of part of the surrounding stator;
- figure 3 is a schematic representation of a sector of a steel sheet of the rotor and of 4 nodes selected in said sector;
- figure 4 is a schematic representation of a sector of a steel sheet of the rotor and of more nodes selected in said sector;
- figure 5 is an example of the time evolution of the average temperature of a rotor, calculated on the basis of a method according to the invention;
- figure 6 is an example of the time evolution of a temperature, calculated on the basis of a method according to the invention;

## DETAILLED DESCRIPTION OF SPECIFIC EMBODIMENTS

An example of a hydroelectric turbine 10 to which the invention can be applied is illustrated on figure 1. Said turbine can be implemented in a hydroelectric power plant, with two water reservoirs, one reservoir upstream and one reservoir downstream.

Turbine 10 comprises a runner 52, a distributor 54 (which comprises guide vanes), a draft tube 56 and a shaft line 58. A spiral case 12 guides a flow of water from a duct 13 connected to a main inlet valve 14 and to the distributor, downstream of a penstock.

Via the shaft line 58 the runner 52 is mechanically coupled to the rotor 20 of an electric motor generator 25 , for example asynchronous machine or a DFIM, when rotating, the runner drives the rotor into rotation inside the stator 24 of said motor or motor-generator. The stator windings are located in the stator and are themselves connected to the grid via a circuit breaker and a transformer.

The rotor comprises a lamination stack as described in US 8829759 . The laminations 25 of the stack are made of magnetic steel in which the magnetic flux circulates.

Figure 2 represents a lamination 25 of said lamination stack; it comprises an inner part 26, also called the yoke, surrounded by teeth 28. Rotor slots 30 extend between the teeth, said slots holding a portion of the rotor winding 32 (see figure 3) in which the rotor currents flow. The rotor winding 32 is usually made of copper (or insulated copper conductors).

An embodiment of the invention to estimate the temperature of the different parts and possibly predict their evolution over time is explained in connection with figure 3, which shows part of lamination 25, said part comprising part of the teeth 28, 28' and part of the yoke 26; a portion of the rotor winding 32 is also shown on figure 3.

A method according to the invention can be applied to the entire set of laminations. However, the method according to the invention can be extended to several (but not all) laminations, in which case one or more parameter(s), for example the 'control volume' Vm (in the equation below) and/or the heat exchange between laminations 'qcond' can be adapted. There is therefore the possibility of simplifying or complicating the model according to the invention by redefining one or more of the relevant parameters, in particular those which are presented below in the equations.

It is also possible to separate the axial components, for example when considering one set of laminations in the middle or in an intermediate region of the stack and sets of laminations at each end, in particular if one is interested in the

temperatures in one or both end region(s) and in a middle or intermediate region. This will increase the set of equations accordingly, meaning more computational effort.

In this embodiment, a sector A , or B, or C is selected, which extends radially and comprises a portion of the yoke, a slot 30 and the portion of the winding 32 inside said slot and two parts of the neighboring teeth 28, 28' which are on both sides of said portion of the winding . Preferably, said two parts 28, 28' are symmetrical with respect to said slot 30. The different sectors A, B, C are periodic and the results will be the same for each of them; therefore, only one of them is considered.

4 nodes 1, 2, 3, 4 (one in the yoke, two in the teeth, one in the winding (or copper conductor))are selected.

A further embodiment explained below makes use of more nodes (and a corresponding higher discretization), with a corresponding adaptation of the equations.

More generally, the number of nodes is defined as the number of temperatures of interest. The heat exchange is a function of 'length' between two nodes. For example, if one is interested in the temperature at one corner, the node can be located at the corner but the heat exchange has to be recalculated accordingly, depending on the relative locations between the nodes. In the example of figure 2, the nodes are selected at the middle which can be warmest or most representative positions.

In the above examples (including 4 nodes), three different temperatures (temperatures of yoke, teeth and winding) were investigated. Hence the nodes are placed accordingly to the locations of interest. And the node 2 and 4 are actually identical or similar due to symmetry or periodicity of the system. Therefore the three sets of equations as detailed below.

The parameters $L_1$, $L_2$, $L_3$, $L_4$, of figure 3 are adjustable depending on the positions of the nodes.

$H_1$, $H_2$, $H_3$ depend on the geometry of the selected sector.

For each of said nodes, the energy balance (power that flows in and out and how it locally affects the temperature) is estimated or calculated.

The losses created in the rotor can be computed knowing the rotor current and the rotor voltage. A dedicated loss model is used for this purpose distinguishing between:

- $RI^2$, an estimate of the losses, also called copper losses, dissipated in the winding 32 which has a resistance R and in which current I circulates;
- and/or iron losses (in the yoke and the teeth), which are dissipated by heat created in the steel laminations. They depend on the amplitude and frequency of the magnetic field. Multiple models exist to compute them, see for example L. Vandenbossche, S. Jacobs, T. Lugand and A. Schwery, "Improved calculation of iron losses in large salient-pole synchronous hydro-generators," 2016 6th International Electric Drives Production Conference (EDPC), Nuremberg, Germany, 2016, pp. 253-260, doi: 10.1109/EDPC.2016.7851342;
- and/or ventilation losses dissipated in the process of air-acceleration and deceleration needed to cool the machine. The losses can be calculated based on the geometrical information of the machine i.e all air passages and the pressure generating capacity of the rotating parts; these losses are speed dependent;
- and/or additional losses which cover all the remaining losses that are not easily attributable to the above cited loss components. These losses can be dissipated by other parts of the machine, for example massive parts such as air-covers, as well as small amount of losses in the machine, that are usually not analyzed in detail but calculated based on empirically determined factors; these losses are current dependent.

An embodiment of a method according to the invention can be based on the measurement of some parameters which are available in a rotating machine : rotor current, rotor voltage, the rotor speed and the temperature of the cold and/or hot air.

Based on these parameters, the temperature T of the node in the rotor can be estimated in real time, and its evolution T(t) can be estimated or predicted. Inputs can be the losses created on the rotor, the cooling surface, heat transfer coefficient, some air properties, and the cooling air temperature. When there is only one node for one representative part (winding, yoke or teeth), the temperature value can be considered as the average temperature of said part.

For example, T(t) can be given by:

$$\rho V c_p \frac{\mathrm{d}T}{\mathrm{d}t} = -\alpha A(T - T_\infty) + q$$

$$T(t) = -\frac{q}{\alpha A} \exp\left(-\frac{\alpha A}{\rho V c_p} t\right) + \left(T_\infty + \frac{q}{\alpha A}\right)$$

where:

q is an estimate or a measurement of the power (losses) measured (in W); power can be dissipated by convection or conduction (or radiation, but this is much less relevant in the frame of the present invention than convection or conduction). Local power losses can be created by the above mentioned sources;
$\alpha$ is the heat transfer coefficient that describes the heat dissipation on the surface of a material to the surrounding air. It depends on the surface geometry and rugosity, as well as on the speed difference between the material and the air (in other words, it depends on the rotational speed of the machine); it can be adjusted considering node's location (on the cooper, on the yoke...); it can be estimated or calculated for a specific speed and is then adjusted based on the rotor speed measurement;
$\rho$ is the specific density of steel, respectively of the material of the winding (it is a constant of steel, respectively of the material of the winding (usually copper));
Cp is the specific heat capacity of steel or of the material of the winding (also a constant of steel, respectively of the material of the winding (usually copper)).
T is the temperature of a node;
$T_\infty$ is the temperature of the cooling air (cold air temperature); it can be measured at the outlet of coolers;
A is the surface on which heat is exchanged with the conducting coolant , in this case air, cooling the corresponding node;
For the following description, the following parameters will be used:

V: volume of interest (= Volume of considered solids, for example iron and/or Copper).
Li: lengths of figure 3
Hi: heights of figure 3
k (see below) is the heat transfer coefficient for conduction between two materials.

The above set of equation applies when one considers only one node for the whole rotor. No separation is made between the temperatures of the yoke, the teeth and the winding (or the copper): it is the temperature of the rotor. And by adjusting the parameter $\alpha$ with the experimental data, one can approximate it to the temperature of the yoke or of the winding.
A more detailed model for an implementation of the invention is based on the equation of the energy balance:

$$\dot{E}_t = \dot{E}_{in} - \dot{E}_{out} + \dot{E}_{gen}$$

where $\dot{E}_t$ is total balanced volumetric energy -$\dot{E}_{in}$ is the input volumetric energy input , $\dot{E}_{out}$ is the volumetric energy output and $\dot{E}_{gen}$ is the volumetric energy generated .
Thus, the energy balance at any node m (point/location of interest) can be given by:

$$\rho_m c_{p,m} V_m \frac{\partial T_m}{\partial t} = q_{conv} + q_{cond} + \dot{q}_m V_m$$

For example, the energy balance at node 1 (see figure 3) can be given by:

$$\rho_1 c_{p,1} V_1 \frac{\partial T_1}{\partial t} = q_{conv,1} + q_{cond,1} + \dot{q}_{yoke} V_1$$

where:

$$q_{conv} = R_{eff}(T_{air} - T_1)$$

$$R_{eff} = \frac{1}{(1/\alpha_{in} A_{1\to air}) + (L_1/k_1 A_{1\to air})}$$

Reff is an effective thermal resistance where conduction and/or convection heat transfers are considered.

$$q_{cond} = q_{2\to 1} + q_{3\to 1} + q_{4\to 1}$$

$$k_{eff} = \frac{L_2 + L_3}{L_2/k_{steel} + L_3/k_{copper}}$$

$$q_{2\to 1} = q_{4\to 1} = \frac{k_{steel} A_{12}}{L_2 + L_3}(T_2 - T_1),\ q_{1\to 3} = \frac{k_{eff} A_{13}}{L_2 + L_3}(T_3 - T_1),$$

The energy balance at nodes 2 and 4 (see figure 3) can be given by:

$$\rho_2 c_{p,2} V_2 \frac{\partial T_2}{\partial t} = q_{conv,2} + q_{cond,2} + \dot{q}_{teeth} V_2$$

$$q_{conv,2} = R_{eff,2}(T_{air} - T_2)$$

$$R_{eff} = \frac{1}{(1/\alpha_{out} A_{2\to air}) + (L_4/k_{steel} A_{2\to air})}$$

$$q_{cond,2} = q_{1\to 2} + q_{3\to 2}$$

$$q_{1\to 2} = \frac{k_{steel} A_{12}}{L_2 + L_3}(T_1 - T_2),\ q_{3\to 2} = \frac{k_{eff,2} A_{23}}{0.5(H_2 + H_3)}(T_3 - T_2),$$

$$k_{eff,2} = \frac{H_2 + H_3}{H_2/k_{steel} + H_3/k_{copper}}$$

The energy balance at node 3 (see figure 3) can be given by:

$$\rho_3 c_{p,3} V_3 \frac{\partial T_3}{\partial t} = q_{conv,3} + q_{cond,3} + \dot{q}_{copper} V_3$$

Where:

$$q_{cond,3} = q_{1\to3} + 2q_{2\to3}$$

$$q_{conv,3} = R_{eff,3}(T_{air} - T_3)$$

$$R_{eff,3} = \frac{1}{1/(\alpha_{out}A_{3\to air}) + L_4/(k_{copper}A_{3\to air})}$$

$$q_{1\to3} = \frac{k_{eff,1}A_{13}}{L_2 + L_3}(T_1 - T_3),\ q_{2\to3} = \frac{k_{eff,2}A_{23}}{0.5(H_2 + H_3)}(T_2 - T_3),$$

$$k_{eff,2} = \frac{H_2 + H_3}{H_2/k_{steel} + H_3/k_{copper}}$$

The above model concerns the rotor parameters but the stator 24 can be incorporated in the model, which allows more precision on the estimation or calculation or prediction of the rotor temperature but also an estimation or calculation or prediction of the stator temperature. In other words, the sector A can be radially extended to include a portion of the stator, for example comprising a slot $30_s$ (including a conductor) and two parts of neighboring teeth $28_s$, $28'_s$. This means that one or more node(s) of the stator can be included in the above described model:

- the temperature at said one or more node(s) of the stator being calculated or estimated based in the energy balance at said one or more node(s) of said stator;
- and/or the temperature at said nodes 1-4 of the rotor being calculated or estimated based on the above model or calculation(s), including the energy balance at said one or more node(s) of said stator, thereby providing a more precise estimation.

The above model provides an average temperature of the rotor. It can be adapted to provide a more detailed thermal image and/or a finer local temperature resolution, including a temperature for the winding (or copper conductors) and a different temperature for the yoke. In order to do so, it is possible to increase the number of nodes as shown in figure 4.

A model with one node provides the average rotor temperature and a refined one with 4 nodes provides average temperatures for the yoke, the teeth and the winding. This model can still be discretized in more nodes (as shown in figure 4) to have a finer local temperature resolution.

A detailed example of the above model is presented for 4 nodes 1-4 in the rotor; but more nodes or more groups of nodes 1', 2', 3', 4' can be selected as illustrated on figure 4, in which case the above model applies to the additional nodes. More nodes provide a more precise estimation but at a higher calculation cost.

The above equations can be for example solved by electronic means 40, for example a computer or a microprocessor or a micro controller, for example by the controller controlling the hydraulic machine. Such electronic means can be programmed or configured, or can comprise one or more processors comprising or memorizing instructions, to implement a method according to the present invention.

Thus, data can be calculated or generated by said electronic means, said data representing the temporal variations of the temperature.

Any of the above mentioned electronic means may comprise one or more memory/memories to memorize data related to the electrical above mentioned parameters, namely the $\alpha$, $\rho$, $C_p$, A, V, L, H, k etc.

In other words, all relevant information to perform the invention can be available in said electronic means that can solve the equations and hence predict the average temperature as well as its evolution.

The parameters used in the frame of a model according to the invention can be either known (for example the cooling surface and/or the specific heat capacity), or calculated or can be adjusted based on measurements (for example the air density). Temperature, voltage, current data, rotor speed are provided to means 40 (see arrow 41).

Based on the calculated temperature data, the temporal variations of the temperature of a node can be represented as a curve as illustrated for example on figure 5 (in case of three nodes, for instance, yoke, teeth and cooper, it will be possible to record three corresponding curves); in this example the speed of the rotor is 450 rpm , the cold air temperature is 35°C and the total electrical losses amount to 802 kW Figure 6 (which is a zoom on a part of figure 5) shows the temporal variations of the temperature of one-node; similar curves could be drafted for several nodes (for

example: yoke, teeth, winding). Such curves can be displayed on display means 42 (a screen) as illustrated on figure 1. Such curves can show the predicted evolution of the temperature at a particular node over the next hour(s) and, in case any overheating is predicted, help an operator to take a decision as to a change of one or more parameter(s), for example the rotor current and/or the rotor voltage and/or the rotor speed and/or the rotor power and/or the machine power, thus avoiding any predicted overheating.

Consequently the system can also be used as input for a protection system of the machine, that triggers an alarm or even a stop of the machine if overtemperatures are predicted (alarm) or measured (trip).

The method allows for an estimation but also a prediction. The prediction can then be used to detect a problem before it actually arises.

The electronic means according to the invention can further comprise means (for example one or more peripheral means, such as mouse 44, keyboard 46 etc) for selecting:

- one or more steel sheet(s) of a rotor stack;
- and/or one or more sector(s) of said selected steel sheets;
- and/or one or more node(s) in each of said selected sector;
- and/or to adjust or change one or more geometrical model parameter(s) and/or one or more constant(s) in the equations.

The selected element(s) can be stored in a memory area of the electronic means 40 and the temperature of the rotor can be calculated or estimated for the selected node(s) in the selected sector(s) of the selected steel laminations.

For example an operator can select :

- all steel sheets of a rotor, every sector of each lamination and 4 nodes 1-4 (as explained above in connection with figure 3) or more nodes 1'-4' (as explained above in connection with figure 4) in each sector; then, the electronic means can calculate the average temperature of each lamination 25 of the rotor and the evolution of said temperature during the next hours for given speed, current, voltage etc;
- and/or a model from among different preset models running on the computer; for example, it is possible to have a model (a so-called "rough model") for average rotor and/or stator temperatures and more refined models with more nodes for more detailed information.

The model complexity and/or parameters, for example the number of nodes can be adapted for different machines.

The invention makes use of differential equations describing the problem. This is more general than an analytical solution which might not be defined with growing complexity.

A hydraulic machine according to the invention as illustrated on figure 1 can be used for producing electricity or for pumping water with help of the electric motor (controlled by the controller 40 in the embodiment of figure 1) operating the runner so as to pump water from the downstream side to the upstream side of the hydroelectric power plant (pump mode), which increases the water level upstream.

The thermal model implemented according to the invention can estimate the current temperature, preferably in real time, and predict the temperature evolution over time.

One or more trigger limits can be selected and memorized in the machine (in particular in the electronic means) : if, at a certain time, the estimated or predicted temperature exceeds one or more of said predetermined limit(s), the machine can trigger an alarm or a warning. This can indicate additional losses (for example due to faults of the machine) or problems with the loss evacuation (for example faults on the air coolers). If said limit is reached, the machine can be stopped or slowed down and/or the power can be reduced, so that the temperatures falls again under it. This control of the hydraulic machine to reduce power be performed by said means 40 (see arrow 43 on figure 1), for instance, it is possible to reduce the power on the rotor, that is to say to reduce the overall power on the hydraulic machine or in speed. Thus, the temperature prediction can be used to predict a problem and reduce power before damage happens.

The above mentioned electronic means 40, for example a controller or a computer, can be configured or programmed so as to implement a process according to the invention, in particular in order:

a) to estimate the time variation of the temperature;
b) to compare said estimated temperature with one or more predetermined limits.
c) depending on the result of the comparison of step b), to modify one or more parameters of the hydraulic machine so that the temperature remains under one of said limit(s).

The above mentioned electronic means, for example a controller or a computer, comprise means configured or programmed so as to implement a process according to the invention, in particular:

a) means for estimating the time variation of the temperature, based on, or implementing, a method according to the invention;
b) means (a comparator) for comparing said estimated temperature with one or more predetermined limits;
c) possibly means for triggering an alarm or a warning in case said estimated temperature exceeds one or more predetermined limits;
d) means for modifying one or more parameters of the hydraulic machine so that the temperature remains under one of said limit(s).The invention also concerns a computer program comprising instructions for implementing a method according to the invention as disclosed above and in this application. Such program can be loaded on a memory device. When loaded in A computer on which said program is loaded can perform a method according to the invention.

The invention does not implement additional sensors on the rotor.

## Claims

1. Method for estimating and/or predicting at least the temperature of a synchronous or induction machine, for example a DFIM , connected to a grid, said rotor comprising :

   - a stack of steel laminations (25), each steel lamination comprising an inner part (26), also called the yoke, surrounded by teeth (28);
   - a rotor winding (32), integrated between teeth (28), in which the rotor currents flow, the method comprising:

     a) a step of selecting one or more steel laminations of said stack of steel laminations,
     b) a step of selecting at least one node on each of said selected steel laminations in the yoke (26) and/or in the teeth (28) and/or in the rotor winding (32),
     c) then a step of estimating and/or predicting at least one temperature of said rotor, based on the balance of the power that flows in said at least one node, and that is dissipated by the at least one node.

2. Method according to claim 1, comprising estimating or calculating:

   - $RI^2$, an estimate of the losses, also called copper losses, dissipated in the rotor winding (32) which has a resistance R and in which current I circulates;
   - and/or iron losses, in the yoke and the teeth, which are dissipated by heat created in the steel laminations;
   - and/or ventilation losses dissipated in the process of air-acceleration and deceleration needed to cool the machine;
   - and/or additional losses or remaining losses dissipated by other parts of the machine, for example massive parts such as air-covers;
   - and/or additional losses or remaining losses dissipated by other parts of the machine, for example solid metallic parts such as air-covers.

3. Method according to claim 1 or 2, said step of estimating or calculating said at least one temperature implementing the rotor current, the rotor voltage, the rotor speed and the temperature of the cold air.

4. Method according to any of claims 1 to 3, said step b comprising selecting at least one node in the yoke and/or one node in each of the teeth on each side of the rotor winding, and/or one node in the rotor winding.

5. Method according to any of claims 1 to 4, further comprising, based on said at least one temperature, or at least one predicted temperature evolution or change, varying one or more parameters of said hydraulic machine, for example rotor current and/or rotor voltage and/or rotor speed and/or rotor power and/or machine power.

6. Method according to any of claims 1 to 5, said step b) further including selecting at least one node of said stator.

7. Method according to claim 6, said at least one temperature of the stator being calculated or estimated based on the power balance at said one or more node(s) of said stator.

8. Method according to claim 6 or 7, said at least one temperature of the rotor being calculated or estimated based on the power balance at said one or more node(s) of said stator.

**9.** Method according to any of claims 1 to 8, comprising a step of selecting one or more sectors (A,B,C...) of each of said selected sheets, each of said sector(s) comprising a portion of the yoke, a portion of the rotor winding (32) and part of each tooth (28, 28') on each side of the rotor winding.

**10.** Method according to any of claims 1 to 9, said at least one temperature of the rotor comprising a temperature of said yoke and a temperature of said rotor winding.

**11.** Method according to any of claims 1 to 10, said step c) being based on the following equation:

$$\rho_m c_{p,m} V_m \frac{\partial T_m}{\partial t} = q_{conv} + q_{cond} + \dot{q}_m V_m$$

**12.** Method according to any of claims 1 to 11, said turbine being provided with a runner (6) mechanically coupled to a shaft line (8), a distributor (4) comprising guide vanes to control a flow of water to said runner.

**13.** A hydroelectric turbine (10) provided with a runner (6) mechanically coupled to a shaft line (8) and a motor, said turbine further comprising a distributor (4) comprising guide vanes to control a flow of water to said runner, said turbine further comprising a controller (16) configured to control said hydroelectric turbine so as to implement a method according to any of claims 1 to 12.

**14.** A hydroelectric turbine (10) according to claim 13, wherein said turbine is of the Francis or Kaplan or bulb turbine type.

**15.** A computer program comprising instructions for implementing a method according to one of claims 1 to 12.

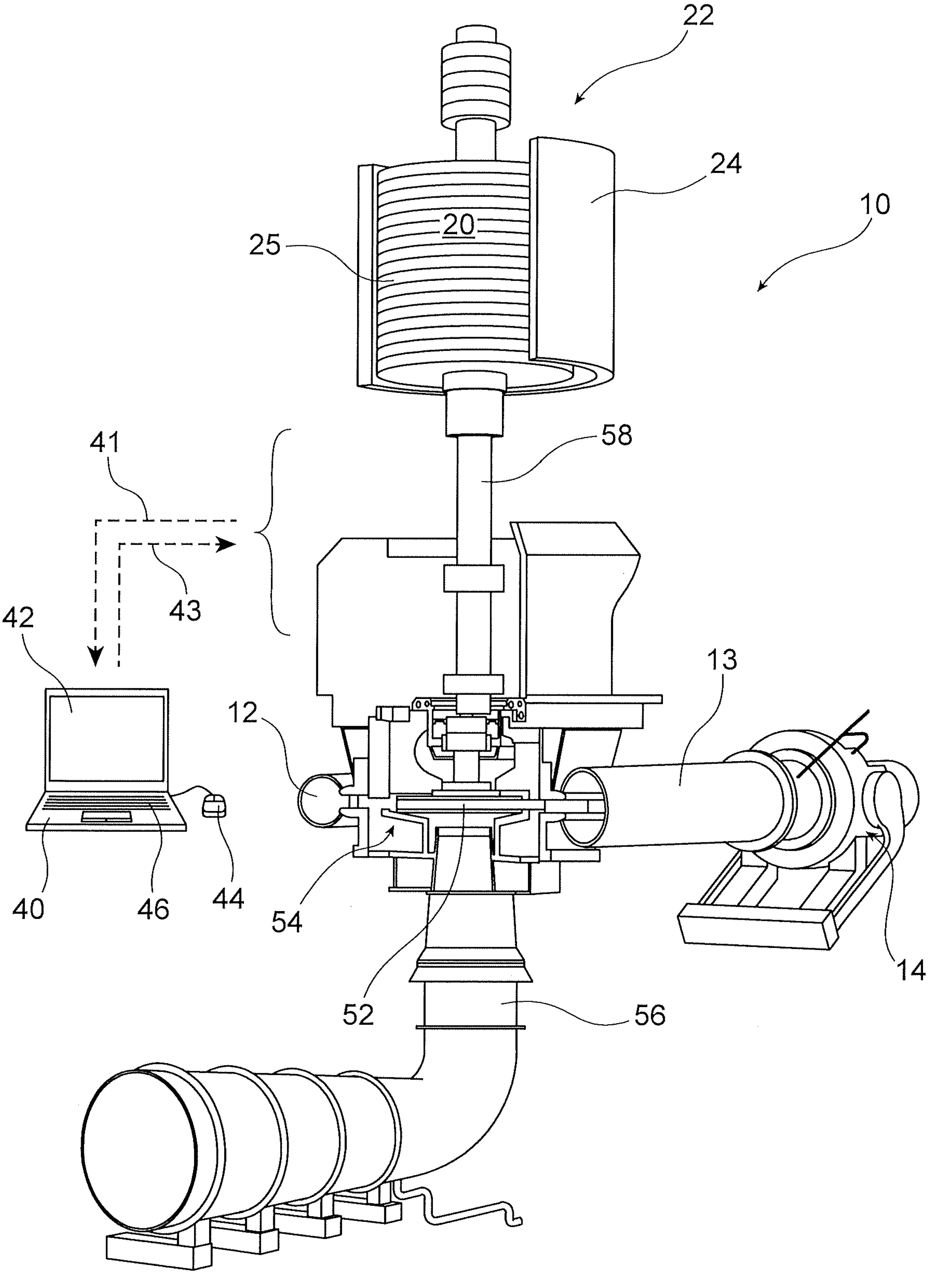


FIG. 1

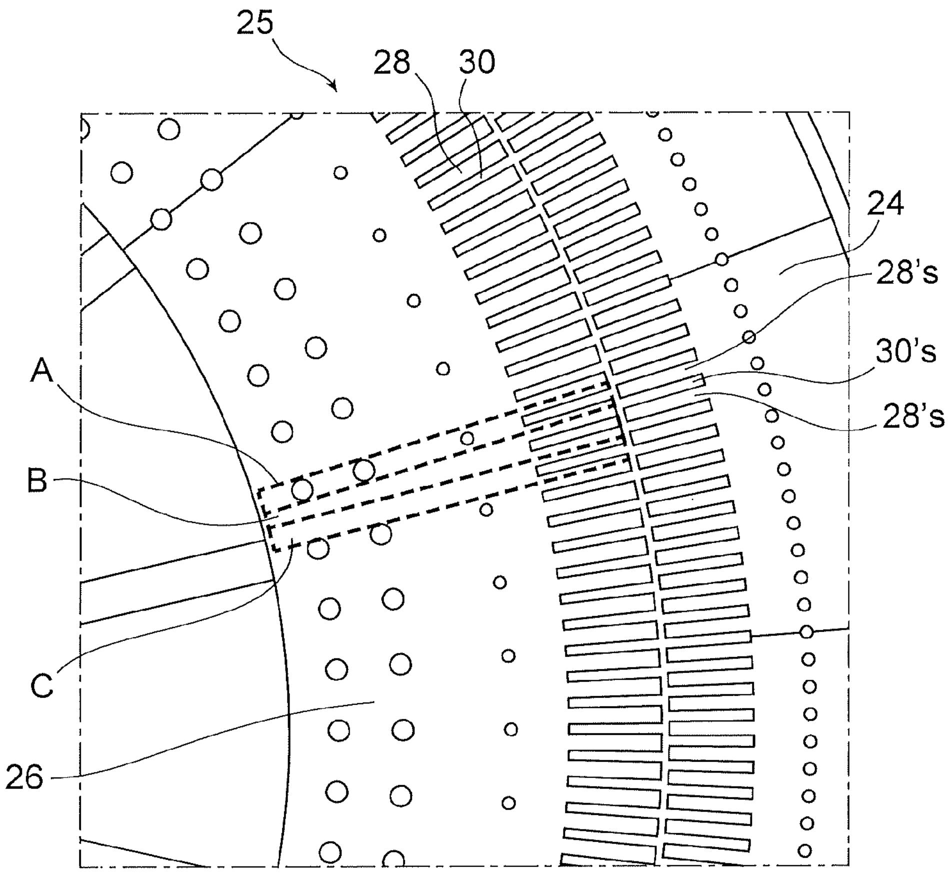
25
28
30
24
28's
30's
28's
A
B
C
26

FIG. 2

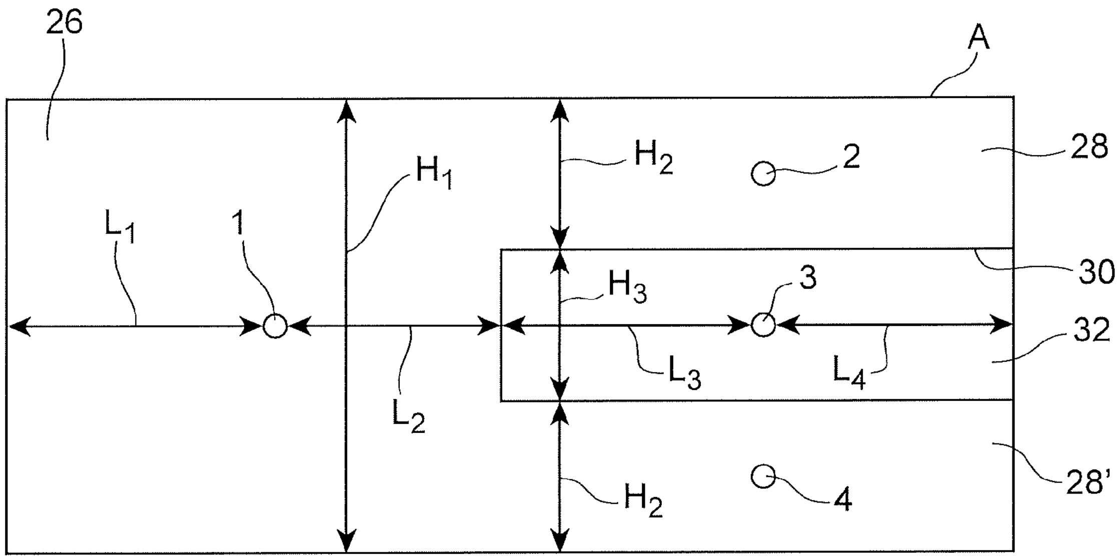
26
A
$H_1$
$H_2$
2
28
$L_1$
1
$H_3$
3
30
32
$L_2$
$L_3$
$L_4$
$H_2$
4
28'

FIG. 3

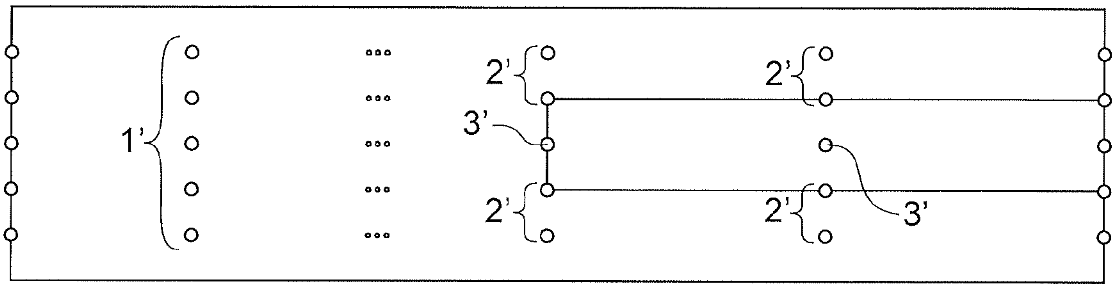


FIG. 4

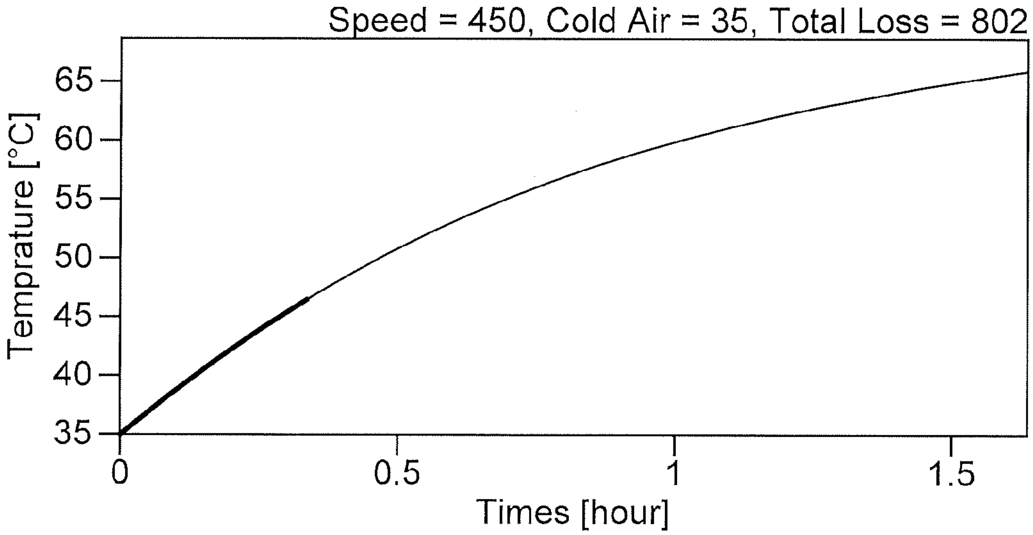


FIG. 5

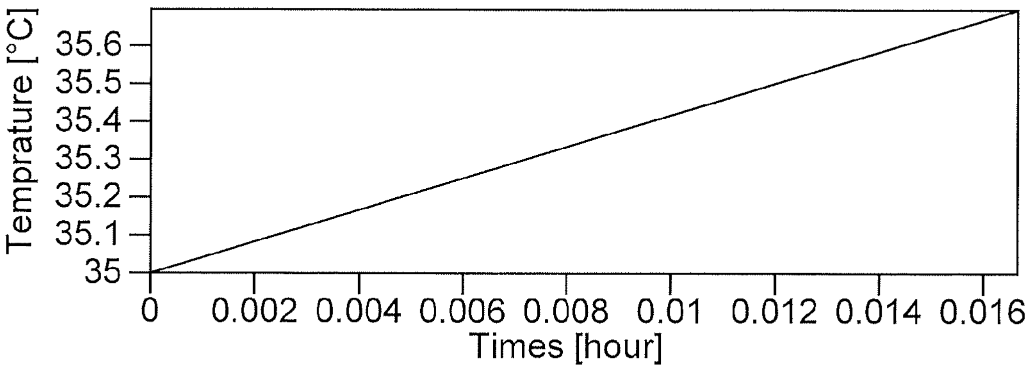


FIG. 6

Europäisches Patentamt
European Patent Office
Office européen des brevets

# EUROPEAN SEARCH REPORT

Application Number
EP 24 15 0042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2017 003610 A1 (DAIMLER AG [DE]) 23 November 2017 (2017-11-23) * paragraphs [0001], [0004], [0011], [0012], [0026] - [0046] * | 1-12,15 | INV. G01K7/42 G01K13/08 H02K11/25 F03B13/00 |
| A | Tatjana Martinovski: "An Induction Motor Model for Virtual Drive Simulation Systems", , 18 December 2019 (2019-12-18), pages 1-58, XP093164763, Retrieved from the Internet: URL:https://aaltodoc.aalto.fi/bitstream/handle/123456789/42737/master_Martinovski_Tatjana_2020.pdf?isAllowed=y&sequence=1 [retrieved on 2024-05-21] * lines 7-13 in the paragraph below Fig. 1; figure 2 * | 1-15 | |
| X | US 2023/010493 A1 (ALLOIN QUENTIN [FR] ET AL) 12 January 2023 (2023-01-12) | 13,14 | TECHNICAL FIELDS SEARCHED (IPC) |
| A | * paragraphs [0001], [0009], [0015], [0032] - [0035], [0044], [0068], [0069], [0076] * | 12 | G01K H02K F03B |

The present search report has been drawn up for all claims

1

| Place of search | Date of completion of the search | Examiner |
|---|---|---|
| The Hague | 22 May 2024 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 15 0042

This annex lists the patent family members relating to the patent documents cited in the above-mentioned European search report. The members are as contained in the European Patent Office EDP file on
The European Patent Office is in no way liable for these particulars which are merely given for the purpose of information.

22-05-2024

| Patent document cited in search report | Publication date | Patent family member(s) | Publication date |
|---|---|---|---|
| DE 102017003610 A1 | 23-11-2017 | NONE | |
| US 2023010493 A1 | 12-01-2023 | CA 3163945 A1 | 17-06-2021 |
| | | CN 114762211 A | 15-07-2022 |
| | | EP 3836335 A1 | 16-06-2021 |
| | | US 2023010493 A1 | 12-01-2023 |
| | | WO 2021116422 A1 | 17-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8829759 B2
- US 8829759 B


### Non-patent literature cited in the description


- **J. PEREZ**. Fundamental principles of transformer thermal loading and protection. *2010 63rd Annual Conference for Protective Relay Engineers, College Station, TX, USA*, 2010, 1-14
- **L. VANDENBOSSCHE** ; **S. JACOBS** ; **T. LUGAND** ; **A. SCHWERY**. Improved calculation of iron losses in large salient-pole synchronous hydro-generators. *2016 6th International Electric Drives Production Conference (EDPC), Nuremberg, Germany*, 2016, 253-260